# EUROPEAN PATENT APPLICATION

(11) **EP 4 841 779 A1**
(43) Date of publication of application: **18.11.2026**
(21) Application number: 24933728.8
(22) Date of filing: 11.09.2024
(51) Int. Cl.: H01M 50/262, H01M 50/264, H01M 50/244, H01M 50/209

(54) **BATTERY AND ELECTRIC DEVICE**

(30) Priority: 03.04.2024 CN 202420685601 U
(71) Applicant: Contemporary Amperex Technology Co., Limited, Ningde, Fujian 352100 (CN)
(72) Inventor: LIN, Zhiquan, Ningde, Fujian 352100 (CN); LIAO, Boxiang, Ningde, Fujian 352100 (CN); YE, Shuifang, Ningde, Fujian 352100 (CN); WEN, Hao, Ningde, Fujian 352100 (CN)
(74) Representative: Lorenz Seidler Gossel Part. mbB
(86) International application number: PCT/CN2024/118340
(87) International publication number: WO 2025/208801

(57) **Abstract**

A battery and an electric device. The battery (100) comprises: a case (10), comprising a first beam (13); battery cell groups (30), including first battery cell groups (31) and second battery cell groups (32) that are arranged adjacent to each other in a first direction, wherein each battery cell group among the first battery cell groups and the second battery cell groups comprises multiple battery cells (20) that are stacked in a second direction, each first battery cell group comprises a first surface (311), each second battery cell group comprises a second surface (321), and the first surface and the second surface are adjacent to each other in the first direction and are both perpendicular to a third direction; and crimping members (40), wherein each crimping member is arranged at the abutment between a corresponding first surface and a corresponding second surface so as to be connected to both the first surface and the second surface. The first beam is located at one end of the first battery cell groups and the second battery cell groups in the second direction, and the crimping members extend in the second direction and are arranged spaced from the first beam. The battery further comprises first electrical connectors (50), wherein each first electrical connector is used for electrically connecting a corresponding first battery cell group and a corresponding second battery cell group, and at least a portion of each first electrical connector is located at a gap between a corresponding crimping member and the first beam.

## Description

### CROSS-REFERENCE

The present application refers to the Chinese Patent Application No. 202420685601.X, entitled "BATTERY AND ELECTRIC APPARATUS" and filed on April 3, 2024, which is incorporated herein by reference in its entirety.

### TECHNICAL FIELD

The present application relates to the technical field of batteries, and in particular, to a battery and an electric apparatus.

### BACKGROUND

At present, in order to simplify the battery pack structure, a module-free battery pack has emerged. In the module-free battery pack, since structures such as a module end plate and a side plate are eliminated, the battery cells, when expanding, are limited and supported only by case beams, which is likely to cause failure of the case.

### SUMMARY

In view of the problem, the present application provides a battery and an electric apparatus, which can alleviate the problem of easy failure of the case caused by a situation where the battery cells, when expanding, are limited and supported only by case beams.

In a first aspect, the present application provides a battery. The battery includes:
a case, including a first beam;
a battery cell group, including a first battery cell group and a second battery cell group disposed adjacent to each other along a first direction, where the first battery cell group and the second battery cell group each include a plurality of battery cells stacked along a second direction; the first battery cell group includes a first surface, and the second battery cell group includes a second surface; the first surface and the second surface are adjacent to each other along the first direction and are both perpendicular to a third direction; the first direction, the second direction, and the third direction are mutually perpendicular to each other; and
a pressing member, disposed at a junction between the first surface and the second surface to be simultaneously connected to the first surface and the second surface;
where the first beam is located at an end of the first battery cell group and the second battery cell group in the second direction, and the pressing member extends in the second direction and is spaced apart from the first beam; the battery further includes a first electric connector, the first electric connector is configured to electrically connect the first battery cell group and the second battery cell group, and at least a portion of the first electric connector is located in a space between the pressing member and the first beam.

Disposing at least a portion of the first electric connector in the space between the pressing member and the first beam enables the pressing member to provide clearance for the first electric connector, such that the pressing member is not interfered with by the position of the first electric connector. In addition, by configuring the pressing member to be simultaneously connected to the first surface of the first battery cell group and the second surface of the second battery cell group that are adjacent to each other, the connection of the battery cells in the two adjacent battery cell groups can be achieved, and the battery cells can be fixed and limited, such that when the battery cells expand to apply pressure to the case, due to the constraint by the pressing member, the deformation of the case is reduced, thereby lowering the requirements for the structural strength of the case beam and also reducing the risk of failure of the case.

In some embodiments, the battery cell group further includes a third battery cell group and a fourth battery cell group, and the battery further includes a partition member; the third battery cell group and the first battery cell group are disposed opposite to each other on two sides of the partition member along the second direction, and the fourth battery cell group and the second battery cell group are disposed opposite to each other on the two sides of the partition member along the second direction; the third battery cell group includes a third surface, the fourth battery cell group includes a fourth surface, and the third surface and the fourth surface are adjacent to each other along the first direction and are both perpendicular to the third direction; the pressing member extends in the second direction and spans the partition member to be connected to the third surface and the fourth surface.

Since the pressing member can span the partition member, the extension of the pressing member is not interfered with by the position of the partition member. The pressing member can simultaneously press against and be connected to four adjacent battery cell groups, thereby improving the pressing efficiency.

In some embodiments, the case further includes a bearing member, the bearing member being configured to bear the battery cell group, and the partition member includes a first wall surface away from the bearing member in the third direction; a minimum distance between the third surface and/or the fourth surface and the bearing member is greater than or equal to a minimum distance between the first wall surface and the bearing member.

In this way, the third surface and/or the fourth surface can be higher than or level with the first wall surface of the partition member. When the pressing member extends in the second direction and spans the partition member, the pressing member is bent and can directly span the partition member from above in a straight line, thereby simplifying the overall structure of the pressing member.

In some embodiments, the partition member includes a clearance groove with an opening facing the third direction, and at least a portion of the pressing member is located in the clearance groove.

When the pressing member extends in the second direction and spans the partition member, since the pressing member is provided with a clearance groove, the pressing member can be directly and partially located in the clearance groove in a straight line for spanning, thereby also simplifying the overall structure of the pressing member.

In some embodiments, the battery cell group further includes a third battery cell group and a fourth battery cell group, and the case further includes a second beam and a third beam; the third battery cell group and the first battery cell group are disposed opposite to each other on two sides of the second beam along the second direction, the fourth battery cell group and the second battery cell group are disposed opposite to each other on the two sides of the second beam along the second direction, and the third beam is located on a side, away from the second beam in the second direction, of the third battery cell group and the fourth battery cell group.

By disposing the second beam between the third battery cell group and the first battery cell group and between the fourth battery cell group and the second battery cell group, the structural strength of the case can be improved in the case that there are a large number of battery cells in the battery, thereby improving the anti-expansion effect of the case.

In some embodiments, the third battery cell group includes a third surface, the fourth battery cell group includes a fourth surface, and the third surface and the fourth surface are adjacent to each other along the first direction and are both perpendicular to the third direction; the battery further includes a locking pressing member, the locking pressing member is disposed at a junction between the third surface and the fourth surface to be simultaneously connected to the third surface and the fourth surface, and two ends of the locking pressing member are connected to the second beam and the third beam, respectively.

Since the locking pressing member is no longer affected by the first electrical connection part, clearance is not required. In this way, the two ends of the locking pressing member may be connected to the second beam and the third beam, respectively, without forming a spacing space with the third beam. When the battery cells of the third battery cell group and the fourth battery cell group expand to apply pressure to the second beam and the third beam of the case, due to the constraint by the locking pressing member, the deformation of the second beam and the third beam is reduced, thereby lowering the requirements for the structural strength of the case beam and reducing the risk of failure of the case.

In some embodiments, the locking pressing member includes a metal connecting member and an insulating connecting member; the metal connecting member is connected to the second beam and the third beam, a portion of the insulating connecting member is located between the third surface and the metal connecting member, and a portion of the insulating connecting member is located between the fourth surface and the metal connecting member.

Since the metal connecting member exhibits better structural strength, configuring the metal connecting member to be connected to the second beam and the third beam can better improve the structural strength of the case, thereby improving the anti-expansion effect. In addition, the insulating connecting member is disposed between the third surface of the third battery cell group and the metal connecting member and between the fourth surface of the fourth battery cell group and the metal connecting member, such that the metal connecting member can be insulated from the battery cells, thereby improving the use reliability of the battery.

In some embodiments, the insulating connecting member is bonded to the third surface and the fourth surface.

Configuring the insulating connecting member to be bonded to the third surface and the fourth surface enables the locking pressing member to be in closer contact with the third battery cell group and the fourth battery cell group, such that the battery cells can be fixed and limited, thereby improving the pressing reliability.

In some embodiments, the metal connecting member is bonded to the insulating connecting member.

By means of bonding, the metal connecting member and the insulating connecting member can be connected more tightly, thereby improving the insulation reliability.

In some embodiments, the insulating connecting member wraps at least a portion of the metal connecting member.

By configuring the insulating connecting member to wrap at least a portion of the metal connecting member, the positional reliability between the insulating connecting member and the metal connecting member can be improved, thereby improving the insulating effect between the metal connecting member and the battery cells.

In some embodiments, the pressing member is bonded to the first surface and the second surface.

Since the pressing member is bonded to the first surface and the second surface, the bonding operation is simple and reliable, and the fixing and limiting between the battery cells are also facilitated.

In some embodiments, the first battery cell group includes a first battery cell directly connected to the first electric connector, and the second battery cell group includes a second battery cell directly connected to the first electric connector; when projected along the third direction, the pressing member is completely misaligned with the first battery cell and/or the second battery cell.

The pressing member is not located above the first battery cell and/or the second battery cell in the third direction, such that a sufficient spacing space is provided between the pressing member and the first beam for the placement of the first electric connector, and there is a larger contact area between the first battery cell and/or the second battery cell and the first electric connector, thereby improving the reliability of the electrical connection.

In some embodiments, the pressing member is made of a composite material of epoxy resin and glass fiber.

The pressing member made of the composite material of epoxy resin and glass fiber exhibits insulating properties and can maintain insulation with the battery cells, thereby improving the reliability of the battery. In addition, the pressing member made of the composite material of epoxy resin and glass fiber exhibits high strength and strong toughness, thereby improving the pressing effect.

In a second aspect, an electric apparatus is provided. The electric apparatus includes the battery according to any one of the above embodiments, and the battery is configured to provide electric energy.

Disposing at least a portion of the first electric connector in the space between the pressing member and the first beam enables the pressing member to provide clearance for the first electric connector, such that the pressing member is not interfered with by the position of the first electric connector. In addition, by configuring the pressing member to be simultaneously connected to the first surface of the first battery cell group and the second surface of the second battery cell group that are adjacent to each other, the connection of the battery cells in the two adjacent battery cell groups can be achieved, and the battery cells can be fixed and limited, such that when the battery cells expand to apply pressure to the case, due to the constraint by the pressing member, the deformation of the case is reduced, thereby lowering the requirements for the structural strength of the case beam and also reducing the risk of failure of the case.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts. In the drawings:
FIG. 1 is a schematic structural diagram of a vehicle according to one or more embodiments.
FIG. 2 is a schematic diagram of an exploded structure of a battery according to one or more embodiments.
FIG. 3 is a schematic diagram of an exploded structure of a battery cell according to one or more embodiments.
FIG. 4 is a schematic structural diagram of a battery according to one or more embodiments.
FIG. 5 is a schematic structural top view of the battery shown in FIG. 4.
FIG. 6 is a schematic structural cross-sectional view of the battery shown in FIG. 5 taken along line A-A.
FIG. 7 is an enlarged schematic view of portion A of the battery shown in FIG. 6.
FIG. 8 is an enlarged schematic view of portion B of the battery shown in FIG. 6.

Reference numerals in the detailed description are as follows:
vehicle 1000, battery 100, case 10, first part 11, second part 12, first beam 13, second beam 15, third beam 16, battery cell 20, end cover 21, electrode terminal 211, housing 22, battery cell assembly 23, battery cell group 30, first battery cell group 31, first surface 311, second battery cell group 32, second surface 321, third battery cell group 33, third surface 331, fourth battery cell group 34, fourth surface 341, pressing member 40, first pressing member 41, second pressing member 42, first electrical connection part 50, locking pressing member 60, metal connecting member 61, insulating connecting member 62, controller 200, motor 300.

### DETAILED DESCRIPTION

The technical solutions in embodiments of the present application will be clearly and completely described hereinafter with reference to the drawings in the embodiments of the present application. It is apparent that the described embodiments are only some, but not all, embodiments of the present application. Based on the embodiments in the present application, all other embodiments obtained by those of ordinary skill in the art without creative efforts shall fall within the protection scope of the present application.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily all refer to the same embodiment, nor are independent or alternative embodiments mutually exclusive with other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "1 and/or 2" may denote: the presence of 1 alone, the simultaneous presence of 1 and 2, and the presence of 2 alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, in order to simplify the PACK structure of the battery, improve the space utilization rate, and meanwhile simplify the mounting process and reduce the production cost, a widely used CTP technology is constantly being innovated and developed. The CTP, i.e., Cell To PACK (cell - battery pack), is to directly integrate cells into a battery pack, thereby omitting an intermediate module architecture, simplifying the structure of the PACK, and improving the space utilization rate.

However, with the removal of the module architecture, some limiting structures for battery cells have also been eliminated. The battery cells, when expanding, are limited and supported only by case beams, which is likely to cause failure of the case.

Typically, a plurality of battery cells are arranged in groups and then disposed side by side in a battery case. To improve the structural strength of the case beams and reduce the risk of failure of the case, a steel hold-down strip is disposed above the battery cell group. The steel hold-down strip can be pressed against the end cover of the battery cells, and two ends of the steel hold-down strip are also locked to the case beams for connection. In this way, when the battery cells expand to apply pressure to the case beams at the two ends, due to the constraint by the steel hold-down strip, the deformation of the case beams is reduced, thereby lowering the requirements for the structural strength of the case beams and reducing the risk of failure of the case.

However, since adjacent battery cell groups need to be connected in series or in parallel, an end portion of the adjacent battery cell groups will be connected using a busbar. In this case, if a steel hold-down strip is connected to the case beams by crossing the busbar, the steel hold-down strip will be lifted, resulting in a larger gap between the steel hold-down strip and the battery cells, and making it impossible for the steel hold-down strip to be pressed against the end cover of the battery cells. If the steel hold-down strip does not cross the busbar, two ends of the steel hold-down strip cannot be locked to the case beams simultaneously for connection.

In some embodiments, to alleviate the problem that the arrangement of the steel hold-down strip is inconvenient due to the busbar connection, such that deformation of the case beams cannot be effectively reduced, the requirements for the structural strength of the case beams cannot be lowered, and the risk of failure of the case cannot be reduced, a battery has been designed according to the present application, and the battery includes a case, a battery cell group, and a pressing member. The case includes a first beam. The battery cell group includes a first battery cell group and a second battery cell group disposed adjacent to each other along a first direction. The first battery cell group and the second battery cell group each include a plurality of battery cells stacked along a second direction; the first battery cell group includes a first surface, and the second battery cell group includes a second surface; the first surface and the second surface are adjacent to each other along the first direction and are both perpendicular to a third direction. The first direction, the second direction, and the third direction are mutually perpendicular to each other. The pressing member is disposed at a junction between the first surface and the second surface to be simultaneously connected to the first surface and the second surface. The first beam is located at an end of the first battery cell group and the second battery cell group in the second direction, and the pressing member extends in the second direction and is spaced apart from the first beam. The battery further includes a first electric connector; the first electric connector is configured to electrically connect the first battery cell group and the second battery cell group, and at least a portion of the first electric connector is located in a space between the pressing member and the first beam.

In this way, disposing at least a portion of the first electric connector in the space between the pressing member and the first beam enables the pressing member to provide clearance for the first electric connector, such that the pressing member is not interfered with by the position of the first electric connector. In addition, by configuring the pressing member to be simultaneously connected to the first surface of the first battery cell group and the second surface of the second battery cell group that are adjacent to each other, the connection of the battery cells in the two adjacent battery cell groups can be achieved, such that when the battery cells expand to apply pressure to the case, due to the constraint by the pressing member, the deformation of the case is reduced, thereby lowering the requirements for the structural strength of case beams and also reducing the risk of failure of the case.

The battery of the present application is applied to an electric apparatus, so as to alleviate the problem that the arrangement of the steel hold-down strip is inconvenient due to the busbar connection, such that deformation of the case beams cannot be effectively reduced, the requirements for the structural strength of the case beams cannot be lowered, and the risk of failure of the case cannot be reduced.

The battery disclosed in the embodiments of the present application may be, but is not limited to being, used in electric apparatuses such as vehicles, ships, or aircraft.

For ease of explanation, the following embodiments are described by taking a vehicle 1000 as an example of the electric apparatus according to an embodiment of the present application.

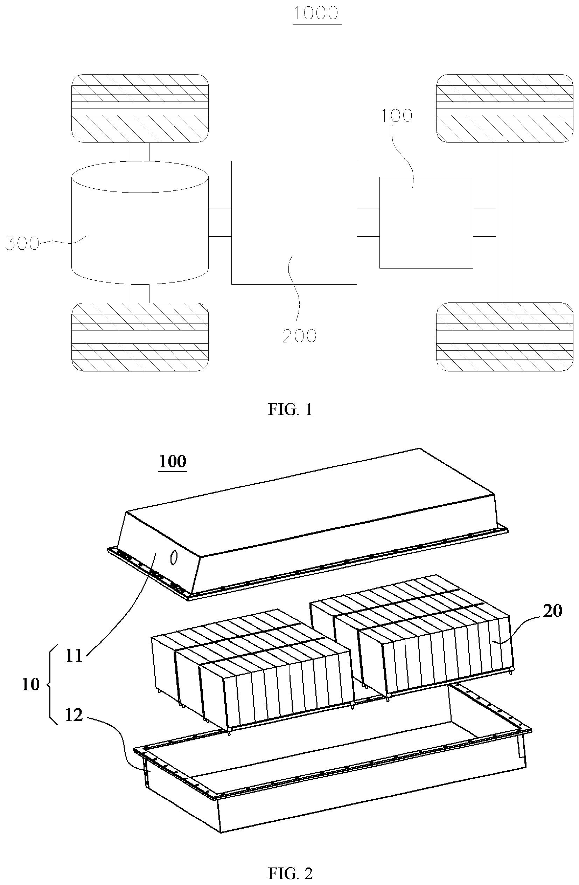

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to supply power to the vehicle 1000. For example, the battery 100 may serve as an operation power source for the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded view of a battery 100 according to some embodiments of the present application. The battery 100 includes a case 10 and battery cells 20. The battery cells 20 are accommodated in the case 10. The case 10 is configured to provide an accommodating space for the battery cells 20, and the case 10 may be of various structures. In some embodiments, the case 10 may include a first part 11 and a second part 12. The first part 11 and the second part 12 cover each other, and the first part 11 and the second part 12 jointly define the accommodating space for accommodating the battery cells 20. The second part 12 may be of a hollow structure with one end open, and the first part 11 may be of a plate-shaped structure. The first part 11 covers the open side of the second part 12, such that the first part 11 and the second part 12 jointly define the accommodating space. The first part 11 and the second part 12 may also each be of a hollow structure with one side open, and the open side of the first part 11 covers the open side of the second part 12. Certainly, the case 10 formed by the first part 11 and the second part 12 may be in various shapes, such as a cylinder and a rectangular parallelepiped.

In the battery 100, a plurality of battery cells 20 may be provided, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and the whole formed by the plurality of battery cells 20 is then accommodated in the case 10.

Each battery cell 20 may be a secondary battery or a primary battery; the battery cell may also be a lithium-sulfur battery, a sodium-ion battery, or a magnesium-ion battery, but is not limited thereto. The battery cell 20 may be cylindrical, flat, rectangular parallelepiped-shaped, or in other shapes.

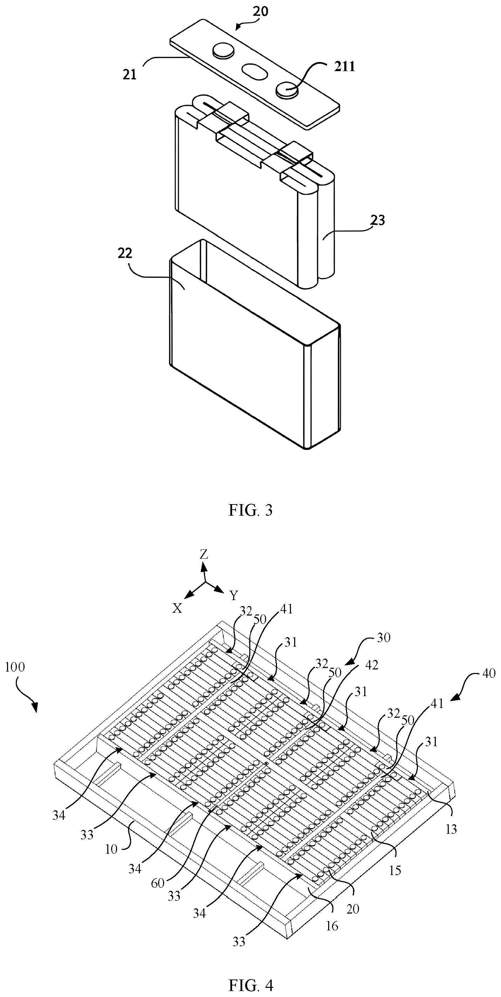

Referring to FIG. 3, FIG. 3 is a schematic diagram of an exploded structure of a battery cell 20 according to some embodiments of the present application. The battery cell 20 refers to the smallest unit forming a battery. As shown in FIG. 3, the battery cell 20 includes an end cover 21, a housing 22, a battery cell assembly 23, and other functional components.

The end cover 21 refers to a component that covers the opening of the housing 22 to isolate the internal environment of the battery cell 20 from the external environment. Without limitation, the shape of the end cover 21 may be adapted to the shape of the housing 22 to mate with the housing 22. In some embodiments, the end cover 21 may be made of a material with a certain hardness and strength (for example, an aluminum alloy), such that the end cover 21 is not easily deformed when being pressed or collided. This enables the battery cell 20 to have higher structural strength, and the safety performance can also be improved. Functional components, such as an electrode terminal 211, may be disposed on the end cover 21. The electrode terminal 211 may be configured to be electrically connected to the battery cell assembly 23 to output or input the electric energy of the battery cell 20. In some embodiments, the end cover 21 may also be provided with a pressure relief mechanism for releasing the internal pressure when the internal pressure or temperature of the battery cell 20 reaches a threshold. The end cover 21 may also be made of various materials, such as copper, iron, aluminum, stainless steel, an aluminum alloy, and plastic, which is not specifically limited in the embodiments of the present application. In some embodiments, the inner side of the end cover 21 may also be provided with an insulating member, and the insulating member may be configured to isolate an electrical connection component in the housing 22 from the end cover 21 to reduce the risk of short circuits. Illustratively, the insulating member may be made of plastic, rubber, or the like.

The housing 22 is an assembly configured to mate with the end cover 21 to form an internal environment of the battery cell 20. The formed internal environment may be used to accommodate the battery cell assembly 23, the electrolyte, and other components. The housing 22 and the end cover 21 may be independent components. An opening may be formed in the housing 22, and at the opening, the end cover 21 covers the opening to form the internal environment of the battery cell 20. Without limitation, the end cover 21 and the housing 22 may be integrated. In some embodiments, the end cover 21 and the housing 22 may form a common connecting surface before other components are placed in the housing, and when the interior of the housing 22 needs to be enclosed, the end cover 21 covers the housing 22. The housing 22 may be in various shapes and dimensions, such as a rectangular parallelepiped, a cylinder, or a hexagonal prism. In some embodiments, the shape of the housing 22 may be determined based on the specific shape and dimensions of the battery cell assembly 23. The housing 22 may be made of various materials, such as copper, iron, aluminum, stainless steel, an aluminum alloy, and plastic, which is not specially limited in the embodiments of the present application.

The battery cell assembly 23 is a component in the battery cell 20 where electrochemical reactions occur. One or more battery cell assemblies 23 may be accommodated in the housing 22. The battery cell assembly 23 is mainly composed of a positive electrode material, a negative electrode material, a separator, and a current collector 231. In some embodiments, the positive electrode material is coated on the battery output electrode connecting member to form a positive electrode plate, and the negative electrode material is coated on the battery output electrode connecting member to form a negative electrode plate. The positive electrode plate and the negative electrode plate are placed in a wound or stacked manner, and the separator is disposed between the positive electrode plate and the negative electrode plate, thereby forming the battery cell assembly 23. The portions of the positive electrode plate and the negative electrode plate that contain active substances constitute a main body part of the battery cell assembly, and the portions of the positive electrode plate and the negative electrode plate that do not contain active substances each constitute a tab. A positive electrode tab and a negative electrode tab may both be located at one end of the main body part, or be located at two ends of the main body part, respectively. During the charging and discharging process of the battery, the positive electrode active substance and the negative electrode active substance react with the electrolyte, and the tabs are connected to the electrode terminals to form a current circuit.

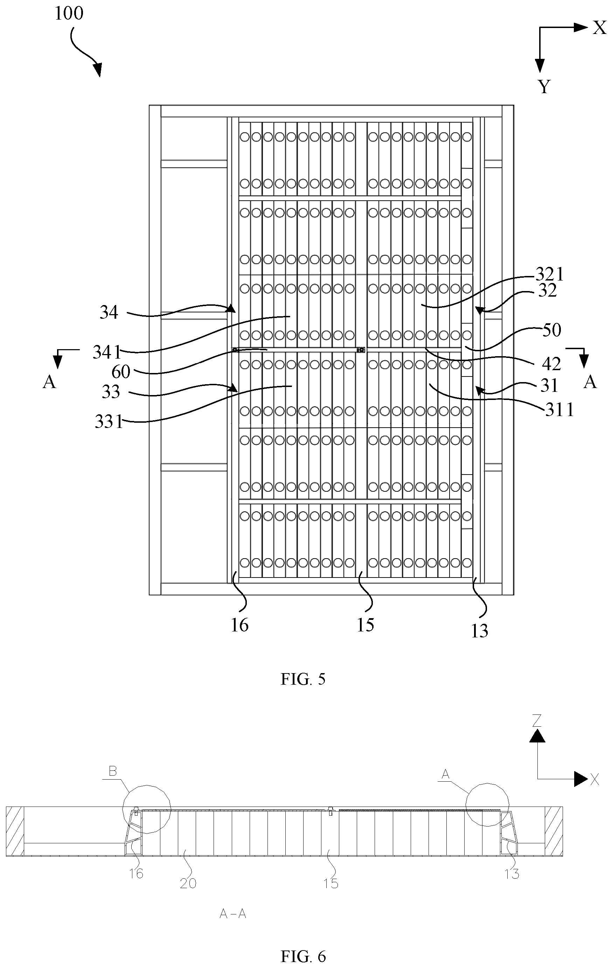

FIG. 4 is a schematic structural diagram of a battery according to one or more embodiments, and FIG. 5 is a schematic structural top view of the battery shown in FIG. 4. Referring to FIGs. 4 and 5, the embodiments of the present application provide a battery 100. The battery includes a case 10, a battery cell group 30, and a pressing member 40. The case 10 includes a first beam 13. The battery cell group 30 includes a first battery cell group 31 and a second battery cell group 32 disposed adjacent to each other along a first direction. The first battery cell group 31 and the second battery cell group 32 each include a plurality of battery cells 20 stacked along a second direction; the first battery cell group 31 includes a first surface 311, and the second battery cell group 32 includes a second surface 321; the first surface 311 and the second surface 321 are adjacent to each other along the first direction and are both perpendicular to a third direction. The first direction, the second direction, and the third direction are mutually perpendicular to each other. The pressing member 40 is disposed at a junction between the first surface 311 and the second surface 321 to be simultaneously connected to the first surface 311 and the second surface 321. The first beam 13 is located at an end of the first battery cell group 31 and the second battery cell group 32 in the second direction, and the pressing member 40 extends in the second direction and is spaced apart from the first beam 13. The battery 100 further includes a first electric connector 50; the first electric connector 50 is configured to electrically connect the first battery cell group 31 and the second battery cell group 32, and at least a portion of the first electric connector 50 is located in a space between the pressing member 40 and the first beam 13.

In some embodiments, the first direction is the Y direction shown in FIG. 4, the second direction is the X direction shown in FIG. 4, and the third direction is the Z direction shown in FIG. 4.

The first surface 311 of the first battery cell group 31 may be the upper surface of the first battery cell group 31 in the third direction, and the first surface 311 may be formed by combining the upper surfaces of all battery cells 20 of the first battery cell group 31 in the third direction. The upper surface of the battery cell 20 in the third direction may be the top surface of the end cover 21 of the battery cell 20. Similarly, the second surface 321 of the second battery cell group 32 may be the upper surface of the second battery cell group 32 in the third direction, and the second surface 321 may be formed by combining the upper surfaces of all battery cells 20 of the second battery cell group 32 in the third direction.

The pressing member 40 refers to a structure that can provide a pressing force to an object. In the present application, the pressing member 40 is disposed at the junction between the first surface 311 and the second surface 321 to be simultaneously connected to the first surface 311 and the second surface 321, thereby providing a pressing force between the first battery cell group 31 and the second battery cell group 32. The pressing member 40 may press against the first surface 311 and the second surface 321 in the third direction and be connected to the first surface 311 and the second surface 321.

The connection of the pressing member 40 to the first surface 311 and the second surface 321 may refer to a full-surface connection with the first surface 311 and the second surface 321 or a partial-surface connection with the first surface 311 and the second surface 321. For example, the pressing member 40 is connected only to part of the surfaces at two ends of the first surface 311 and the second surface 321 in the second direction and part of the surfaces in the middle.

The first beam 13 is a part of the case 10, and may serve as a side wall of the case 10 or a middle beam inside the case 10.

The pressing member 40 is spaced apart from the first beam 13 along the second direction, which means that the pressing member 40 is separated from the first beam 13 along the second direction to form a spacing space.

The first electric connector 50 may be a connecting busbar configured to connect the first battery cell group 31 and the second battery cell group 32 adjacent to each other in series or in parallel. In some embodiments, the first electric connector 50 is configured to electrically connect one battery cell 20, closest to the first beam 13 along the second direction, of the first battery cell group 31 and one battery cell 20, closest to the first beam 13 along the second direction, of the second battery cell 32. At least a portion of the first electric connector 50 is located in the spacing space.

In this way, disposing at least a portion of the first electric connector 50 in the space between the pressing member 40 and the first beam 13 enables the pressing member 40 to provide clearance for the first electric connector 50, such that the pressing member 40 is not interfered with by the position of the first electric connector 50. In addition, by configuring the pressing member 40 to be simultaneously connected to the first surface 311 of the first battery cell group 31 and the second surface 321 of the second battery cell group 32 that are adjacent to each other, the connection of the battery cells 20 in the two adjacent battery cell groups 30 can be achieved, and the battery cells 20 can be fixed and limited, such that when the battery cells 20 expand to apply pressure to the case 10, due to the constraint by the pressing member 40, the deformation of the case 10 is reduced, thereby lowering the requirements for the structural strength of the case beam and reducing the risk of failure of the case 10.

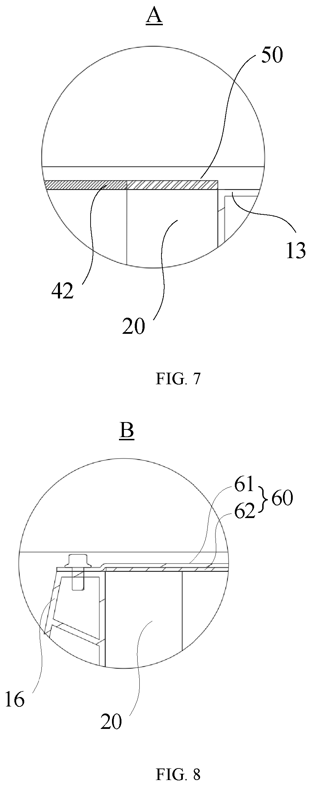

With reference to FIGs. 6 and 7, according to some embodiments of the present application, the pressing member 40 is bonded to the first surface 311 and the second surface 321.

The pressing member 40 may be bonded to the first surface 311 and the second surface 321 by using a binder or a bonding member. It should be noted that the materials of the binder and the bonding member should be insulating, and the bonding member may be a double-sided adhesive tape. In this way, the pressing member 40 can be insulated from the battery cell 20 by using the binder, thereby improving the use reliability of the battery 100.

Since the pressing member 40 is bonded to the first surface 311 and the second surface 321, the bonding operation is simple and reliable, and the fixing and limiting between the battery cells 20 are also facilitated.

According to some embodiments of the present application, the first battery cell group 31 includes a first battery cell directly connected to the first electric connector 50, and the second battery cell group 32 includes a second battery cell directly connected to the first electric connector 50; when projected along the third direction, the pressing member 40 is completely misaligned with the first battery cell and/or the second battery cell.

The projections of the pressing member 40 and the first battery cell and/or the second battery cell along the third direction may refer to the projections toward the case 10 along the third direction.

That the pressing member 40, when projected along the third direction, is completely misaligned with the first battery cell and/or the second battery cell means that a first projection region formed by the pressing member 40 is offset from and does not overlap with a second projection region formed by the first battery cell and/or a third projection region formed by the second battery cell.

That is, the pressing member 40 is not located above the first battery cell and/or the second battery cell in the third direction, such that a sufficient spacing space is provided between the pressing member 40 and the first beam 13 for the placement of the first electric connector 50, and there is a larger contact area between the first battery cell and/or the second battery cell and the first electric connector 50, thereby improving the reliability of the electrical connection.

According to some embodiments of the present application, the pressing member 40 is made of a composite material of epoxy resin and glass fiber.

The pressing member 40 made of the composite material of epoxy resin and glass fiber exhibits insulating properties and can maintain insulation with the battery cells 20, thereby improving the reliability of the battery 100. In addition, the pressing member 40 made of the composite material of epoxy resin and glass fiber exhibits high strength and strong toughness, thereby improving the pressing effect.

According to some embodiments of the present application, the battery cell group 30 further includes a third battery cell group 33 and a fourth battery cell group 34, and the battery 100 further includes a partition member; the third battery cell group 33 and the first battery cell group 31 are disposed opposite to each other on two sides of the partition member along the second direction, and the fourth battery cell group 34 and the second battery cell group 32 are disposed opposite to each other on the two sides of the partition member along the second direction. The third battery cell group 33 includes a third surface 331, and the fourth battery cell group 34 includes a fourth surface 341; the third surface 331 and the fourth surface 341 are adjacent to each other along the first direction and are both perpendicular to the third direction. The pressing member 40 extends in the second direction and spans the partition member to be connected to the third surface 331 and the fourth surface 341.

The partition member refers to a component configured to separate at least two objects. In the embodiments of the present application, the partition member may be a part of the case 10. For example, the partition member may be some beam structures inside the case 10 that enhance the structural strength of the case 10, such as a second beam 15 described in the following embodiments. The partition member may also be a component that has other functions, for example, a component for electrical separation or thermal insulation partition used for the operation reliability of the battery 100.

The third surface 331 of the third battery cell group 33 may be the upper surface of the third battery cell group 33 in the third direction, and the third surface 331 may be formed by combining the upper surfaces of all battery cells 20 of the third battery cell group 33 in the third direction. The upper surface of the battery cell 20 in the third direction may be the top surface of the end cover 21 of the battery cell 20. Similarly, the fourth surface 341 of the fourth battery cell group 34 may be the upper surface of the fourth battery cell group 34 in the third direction, and the fourth surface 341 may be formed by combining the upper surfaces of all battery cells 20 of the fourth battery cell group 34 in the third direction.

The connection manner of the pressing member 40 to the third surface 331 and the fourth surface 341 is not limited to bonding. The connection of the pressing member 40 to the third surface 331 and the fourth surface 341 may refer to a full-surface connection with the third surface 331 and the fourth surface 341 or a partial-surface connection with the third surface 331 and the fourth surface 341. For example, the pressing member 40 is connected only to part of the surfaces at two ends of the third surface 331 and the fourth surface 341 in the second direction and part of the surfaces in the middle.

In the embodiments, since the pressing member 40 can span the partition member, the extension of the pressing member 40 is not interfered with by the position of the partition member. The pressing member 40 can simultaneously press against and be connected to four adjacent battery cell groups 30, thereby improving the pressing efficiency.

Referring to FIG. 6, in some embodiments, the case 10 further includes a bearing member, and the bearing member is configured to bear the battery cell group 30; the partition member includes a first wall surface away from the bearing member along the third direction, and a minimum distance D1 between the third surface 331 and/or the fourth surface 341 and the bearing member is greater than or equal to a minimum distance D2 between the first wall surface and the bearing member.

The first wall surface of the partition member may be the upper surface of the partition member in the third direction.

In this way, the third surface 331 and/or the fourth surface 341 can be higher than or level with the first wall surface of the partition member. When the pressing member 40 extends in the second direction and spans the partition member, the pressing member 40 is bent and can directly span the partition member from above in a straight line, thereby simplifying the overall structure of the pressing member 40.

In other embodiments, the partition member may also include a clearance groove with an opening facing the third direction, and at least a portion of the pressing member 40 is located in the clearance groove.

In some embodiments, the clearance groove may be provided on a surface, on the same side as the third surface 331 and the fourth surface 341 in the third direction, of the partition member.

When the pressing member 40 extends in the second direction and spans the partition member, since the pressing member 40 is provided with the clearance groove, the pressing member 40 can be directly and partially located in the clearance groove in a straight line for spanning, thereby also simplifying the overall structure of the pressing member 40.

It should be noted that in the above case of providing the clearance groove, the clearance groove may be provided in the case that a maximum distance between the third surface 331 and/or the fourth surface 341 and the bearing member is smaller than the minimum distance D2 between the first wall surface and the bearing member.

Referring to FIGs. 5, 6, and 8, according to some embodiments of the present application, the battery cell group 30 further includes a third battery cell group 33 and a fourth battery cell group 34, and the case 10 further includes a second beam 15 and a third beam 16; the third battery cell group 33 and the first battery cell group 31 are disposed opposite to each other on two sides of the second beam 15 along the second direction, the fourth battery cell group 34 and the second battery cell group 32 are disposed opposite to each other on the two sides of the second beam 15 along the second direction, and the third beam 16 is located at an end, away from the second beam 15 in the second direction, of the third battery cell group 33 and the fourth battery cell group 34.

The second beam 15 is located between the first beam 13 and the third beam 16 along the second direction and may be used as the middle beam of the case 10, and the third beam 16 and the first beam 13 may be used as the side walls of the case 10. Certainly, in other embodiments, the third beam 16 and the first beam 13 may also be beam structures located in the case 10.

By disposing the second beam 15 between the third battery cell group 33 and the first battery cell group 31 and between the fourth battery cell group 34 and the second battery cell group 32, the structural strength of the case 10 can be improved in the case that there are a large number of battery cells 20 in the battery 100, thereby improving the anti-expansion effect of the case 10.

In some embodiments, the third battery cell group 33 includes a third surface 331, and the fourth battery cell group 34 includes a fourth surface 341; the third surface 331 and the fourth surface 341 are adjacent to each other along the first direction and are both perpendicular to the third direction. The battery 100 further includes a locking pressing member 60, and the locking pressing member 60 is disposed at a junction between the third surface 331 and the fourth surface 341 to be simultaneously connected to the third surface 331 and the fourth surface 341; two ends of the locking pressing member 60 are connected to the second beam 15 and the third beam 16, respectively.

The difference between the locking pressing member 60 and the pressing member 40 is that a connection relationship can be formed between the two ends of the locking pressing member 60 and the case 10, thereby achieving locking. In some embodiments, the connection relationships between the two ends of the locking pressing member 60 and the second beam 15 and the third beam 16 may be bolt connections, welding connections, or the like.

Since the third battery cell group 33 and the fourth battery cell group 34 are disposed opposite to the first battery cell group 31 and the second battery cell group 32, respectively, along the second direction, that is, the third battery cell group 33 and the first battery cell group 31 are arranged in one row, and the fourth battery cell group 34 and the second battery cell group 32 are arranged adjacently in one row, the first electrical connection part 50 may be provided at only one end of the two rows of battery cell groups 24. That is, the first electrical connection part 50 is provided at an end, away from the third battery cell group 33 and the fourth battery cell group 34 in the second direction, of the first battery cell group 31 and the second battery cell group 32, while no first electrical connection part 50 is provided at an end, away from the first battery cell group 31 and the second battery cell group 32 in the second direction, of the third battery cell group 33 and the fourth battery cell group 34.

Since the locking pressing member 60 is no longer affected by the first electrical connection part 50, clearance is not required. In this way, the two ends of the locking pressing member 60 may be connected to the second beam 15 and the third beam 16, respectively, without forming a spacing space with the third beam 16. When the battery cells 20 of the third battery cell group 33 and the fourth battery cell group 34 expand to apply pressure to the second beam 15 and the third beam 16 of the case 10, due to the constraint by the locking pressing member 60, the deformation of the second beam 15 and the third beam 16 is reduced, thereby lowering the requirements for the structural strength of the case beam and reducing the risk of failure of the case 10.

According to some embodiments of the present application, the locking pressing member 60 includes a metal connecting member 61 and an insulating connecting member 62. The metal connecting member 61 is connected to the second beam 15 and the third beam 16, a portion of the insulating connecting member 62 is located between the third surface 331 and the metal connecting member 61, and a portion of the insulating connecting member 62 is located between the fourth surface 341 and the metal connecting member 61.

The metal connecting member 61 refers to a connecting member made of a metal material. For example, the metal material may be steel or an aluminum alloy. The insulating connecting member 62 refers to a connecting member made of an insulating material. For example, the insulating material may be rubber, polyurethane rubber, or plastic.

Since the metal connecting member 61 exhibits better structural strength, configuring the metal connecting member 61 to be connected to the second beam 15 and the third beam 16 can better improve the structural strength of the case 10, thereby improving the anti-expansion effect. In addition, the insulating connecting member 62 is disposed between the third surface 331 of the third battery cell group 33 and the metal connecting member 61 and between the fourth surface 341 of the fourth battery cell group 34 and the metal connecting member 61, such that the metal connecting member 61 can be insulated from the battery cells 20, thereby improving the use reliability of the battery 100.

In some embodiments, the insulating connecting member 62 is bonded to the third surface 331 and the fourth surface 341.

The insulating connecting member 62 may be bonded to the third surface 331 and the fourth surface 341 by using a binder or a bonding member. It should be noted that the materials of the binder and the bonding member should also be insulating, and the bonding member may be a double-sided adhesive tape.

Configuring the insulating connecting member 62 to be bonded to the third surface 331 and the fourth surface 341 enables the locking pressing member 60 to be in closer contact with the third battery cell group 30 and the fourth battery cell group 34, such that the battery cells 20 can be fixed and limited, thereby improving the pressing reliability.

According to some embodiments of the present application, the metal connecting member 61 is bonded to the insulating connecting member 62.

By means of bonding, the metal connecting member 61 and the insulating connecting member 62 can be connected more tightly, thereby improving the insulation reliability.

According to some embodiments of the present application, the insulating connecting member 62 wraps at least a portion of the metal connecting member 61.

That the insulating connecting member 62 wraps at least a portion of the metal connecting member 61 means that, along the circumferential direction of the metal connecting member 61, the insulating connecting member 62 wraps at least a portion of the metal connecting member 61.

In some embodiments, the insulating connecting member 62 may be an insulating layer wrapped on the metal connecting member 61. For example, the insulating connecting member may wrap around the outer periphery of the metal connecting member 61 by a heat shrink process, or the insulating connecting member 62 in a sheet shape may adhesively wrap around the outer periphery of the metal connecting member 61 by means of bonding.

By configuring the insulating connecting member 62 to wrap at least a portion of the metal connecting member 61, the positional reliability between the insulating connecting member 62 and the metal connecting member 61 can be improved, thereby improving the insulating effect between the metal connecting member 61 and the battery cells 20.

Referring to FIGs. 5 to 8, according to some embodiments of the present application, the battery cell group 30 includes a plurality of first battery cell groups 31, a plurality of second battery cell groups 32, a plurality of third battery cell groups 33, and a plurality of fourth battery cell groups 34, all of which are equal in number. The plurality of first battery cell groups 31 and the plurality of second battery cell groups 32 are alternately arranged along the first direction, and the plurality of third battery cell groups 33 and the plurality of fourth battery cell groups 34 are alternately arranged along the first direction. Each first battery cell group 31 and each third battery cell group 33 are disposed opposite to each other on the two sides of the second beam 15 along the second direction, and each second battery cell group 32 and each fourth battery cell group 34 are disposed opposite to each other on the two sides of the second beam 15 along the second direction. The first beam 13 is located at an end, away from the second beam 15 in the second direction, of all the first battery cell groups 31 and all the second battery cell groups 32.

A first battery cell group 31 and a second battery cell group 32 adjacent to each other along the first direction, as well as a third battery cell group 33 opposite to the first battery cell group 31 along the second direction and a fourth battery cell group 33 opposite to the second battery cell group 32 along the second direction, are combined to form one sub-battery cell group. The battery cell group 30 includes at least two sub-battery cell groups adjacent to each other along the first direction.

The pressing member 40 includes a first pressing member 41 and a second pressing member 42. The first pressing member 41 is disposed on one of the sub-battery cell groups, and the second pressing member 42 and the locking pressing member 60 are disposed on the other of the sub-battery cell groups.

The first pressing member 41 is disposed at the junction between the first surface 311 of the first battery cell group 31 and the second surface 321 of a second battery cell group 32 adjacent thereto to be simultaneously connected to the first surface 311 and the second surface 321. The first pressing member 41 extends in the second direction and is spaced apart from the first beam 13. The first electric connector 50 is configured to electrically connect the first battery cell group 31 and the second battery cell group 32, and at least a portion of the first electric connector 50 is located in the space between the pressing member 40 and the first beam 13. The first pressing member 41 extends in the second direction and spans the second beam 15 to be connected to the third surface 331 and the fourth surface 341.

The second pressing member 42 is disposed at the junction between the first surface 311 of the first battery cell group 31 and the second surface 321 of a second battery cell group 32 adjacent thereto to be simultaneously connected to the first surface 311 and the second surface 321. The first pressing member 41 extends in the second direction and is spaced apart from the first beam 13. The first electric connector 50 is configured to electrically connect the first battery cell group 31 and the second battery cell group 32, and at least a portion of the first electric connector 50 is located in the space between the pressing member 40 and the first beam 13. The locking pressing member 60 is disposed at the junction between the third surface 331 and the fourth surface 341 to be simultaneously connected to the third surface 331 and the fourth surface 341, and the two ends of the locking pressing member 60 are connected to the second beam 15 and the third beam 16, respectively.

In this way, various pressing members 40 and various manners of cooperation between the pressing members 40 and the locking pressing member 60 can be provided in the battery 100. In addition to providing clearance for the first electric connector 50, in one aspect, four battery cell groups 30 adjacent to each other can be simultaneously pressed and connected by the first pressing member 40, thereby improving the pressing efficiency; in another aspect, the deformation of the second beam 15 and the third beam 16 can be reduced by the cooperation between the second pressing member 40 and the locking pressing member 60, thereby lowering the requirements for the structural strength of the case beam and reducing the risk of failure of the case 10.

In some embodiments, the embodiments of the present application further provide an electric apparatus. The electric apparatus includes the battery 100 according to any one of the above embodiments. The battery 100 is configured to provide electric energy.

Disposing at least a portion of the first electric connector 50 in the space between the pressing member 40 and the first beam 13 enables the pressing member 40 to provide clearance for the first electric connector 50, such that the pressing member 40 is not interfered with by the position of the first electric connector 50. In addition, by configuring the pressing member 40 to be simultaneously connected to the first surface 311 of the first battery cell group 31 and the second surface 321 of the second battery cell group 32 that are adjacent to each other, the connection of the battery cells 20 in the two adjacent battery cell groups 30 can be achieved, and the battery cells 20 can be fixed and limited, such that when the battery cells 20 expand to apply pressure to the case 10, due to the constraint by the pressing member 40, the deformation of the case 10 is reduced, thereby lowering the requirements for the structural strength of the case beam and reducing the risk of failure of the case 10.

The technical features of the embodiments described above may be combined in any manner. For brevity, not all possible combinations of the technical features in the above embodiments are described. However, as long as no contradiction exists in the combinations of the technical features, such combinations should be considered to be within the scope of the specification.

The embodiments described above merely represent several implementations of the present application, and the description thereof is specific and detailed, but should not be understood as limiting the patent scope of the present application. It should be noted that various changes and modifications can be made by those of ordinary skill in the art without departing from the concept of the present application, and these changes and modifications shall all fall within the protection scope of the present application. Therefore, the protection scope of the patent in the present application shall be subject to the appended claims.

## Claims

1. A battery, comprising:
a case, comprising a first beam;
a battery cell group, comprising a first battery cell group and a second battery cell group disposed adjacent to each other along a first direction, wherein the first battery cell group and the second battery cell group each comprise a plurality of battery cells stacked along a second direction; the first battery cell group comprises a first surface, and the second battery cell group comprises a second surface; the first surface and the second surface are adjacent to each other along the first direction and are both perpendicular to a third direction; the first direction, the second direction, and the third direction are mutually perpendicular to each other; and
a pressing member, disposed at a junction between the first surface and the second surface to be simultaneously connected to the first surface and the second surface;
wherein the first beam is located at an end of the first battery cell group and the second battery cell group in the second direction, and the pressing member extends in the second direction and is spaced apart from the first beam; the battery further comprises a first electric connector, the first electric connector is configured to electrically connect the first battery cell group and the second battery cell group, and at least a portion of the first electric connector is located in a space between the pressing member and the first beam.

2. The battery according to claim 1, wherein the battery cell group further comprises a third battery cell group and a fourth battery cell group, and the battery further comprises a partition member; the third battery cell group and the first battery cell group are disposed opposite to each other on two sides of the partition member along the second direction, and the fourth battery cell group and the second battery cell group are disposed opposite to each other on the two sides of the partition member along the second direction; the third battery cell group comprises a third surface, the fourth battery cell group comprises a fourth surface, and the third surface and the fourth surface are adjacent to each other along the first direction and are both perpendicular to the third direction; the pressing member extends in the second direction and spans the partition member to be connected to the third surface and the fourth surface.

3. The battery according to claim 2, wherein the case further comprises a bearing member, the bearing member being configured to bear the battery cell group, and the partition member comprises a first wall surface away from the bearing member in the third direction; a minimum distance between the third surface and the bearing member is greater than or equal to a minimum distance between the first wall surface and the bearing member.

4. The battery according to claim 2 or 3, wherein the case further comprises a bearing member, the bearing member being configured to bear the battery cell group, and the partition member comprises a first wall surface away from the bearing member in the third direction; a minimum distance between the fourth surface and the bearing member is greater than or equal to a minimum distance between the first wall surface and the bearing member.

5. The battery according to claim 2, wherein the partition member comprises a clearance groove with an opening facing the third direction, and at least a portion of the pressing member is located in the clearance groove.

6. The battery according to any one of claims 1 to 5, wherein the battery cell group further comprises a third battery cell group and a fourth battery cell group, and the case further comprises a second beam and a third beam; the third battery cell group and the first battery cell group are disposed opposite to each other on two sides of the second beam along the second direction, the fourth battery cell group and the second battery cell group are disposed opposite to each other on the two sides of the second beam along the second direction, and the third beam is located on a side, away from the second beam in the second direction, of the third battery cell group and the fourth battery cell group.

7. The battery according to claim 6, wherein the third battery cell group comprises a third surface, the fourth battery cell group comprises a fourth surface, and the third surface and the fourth surface are adjacent to each other along the first direction and are both perpendicular to the third direction; the battery further comprises a locking pressing member, the locking pressing member is disposed at a junction between the third surface and the fourth surface to be simultaneously connected to the third surface and the fourth surface, and two ends of the locking pressing member are connected to the second beam and the third beam, respectively.

8. The battery according to claim 7, wherein the locking pressing member comprises a metal connecting member and an insulating connecting member; the metal connecting member is connected to the second beam and the third beam, a portion of the insulating connecting member is located between the third surface and the metal connecting member, and a portion of the insulating connecting member is located between the fourth surface and the metal connecting member.

9. The battery according to claim 8, wherein the insulating connecting member is bonded to the third surface and the fourth surface.

10. The battery according to claim 9, wherein the metal connecting member is bonded to the insulating connecting member.

11. The battery according to claim 9, wherein the insulating connecting member wraps at least a portion of the metal connecting member.

12. The battery according to any one of claims 1 to 11, wherein the pressing member is bonded to the first surface and the second surface.

13. The battery according to any one of claims 1 to 12, wherein the first battery cell group comprises a first battery cell directly connected to the first electric connector, and the second battery cell group comprises a second battery cell directly connected to the first electric connector; when projected along the third direction, the pressing member is completely misaligned with the first battery cell.

14. The battery according to any one of claims 1 to 13, wherein the first battery cell group comprises a first battery cell directly connected to the first electric connector, and the second battery cell group comprises a second battery cell directly connected to the first electric connector; when projected along the third direction, the pressing member is completely misaligned with the second battery cell.

15. The battery according to claims 1 to 14, wherein the pressing member is made of a composite material of epoxy resin and glass fiber.

16. An electric apparatus, comprising the battery according to any one of claims 1 to 15, wherein the battery is configured to provide electric energy.
